# EUROPEAN PATENT SPECIFICATION

(11) **EP 1 750 910 B1**
(45) Date of publication and mention of the grant of the patent: **28.05.2008**
(21) Application number: 05734916.9
(22) Date of filing: 20.04.2005
(51) Int. Cl.: B25J 15/10, B65G 47/90

(54) **APPARATUS AND METHOD TO GRIP OBJECTS THAT CAN BE PENETRATED**
VORRICHTUNG UND VERFAHREN ZUM ERGREIFEN VON DURCHDRINGBAREN GEGENSTÄNDEN
APPAREIL ET PROCEDE PERMETTANT DE SAISIR DES OBJETS POUVANT ETRE PENETRES

(30) Priority: 21.04.2004 NO 20041636
(43) Date of publication of application: 14.02.2007
(73) Proprietor: Sinvent AS, 7465 Trondheim (NO)
(72) Inventor: BULJO, Jan, O., N-7562 Hundhamaren (NO)
(74) Representative: Charlton, Peter John
(86) International application number: PCT/NO2005/000132
(87) International publication number: WO 2005/102620

(56) References cited:
- EP-A1- 1 021 955
- WO-A1-20/04043151
- US-A- 2 604 351
- US-A- 5 054 831
- US-A- 6 112 680
- DATABASE WPI Week 198418, Derwent Publications Ltd., London, GB; AN 1984-112502, XP003003486 & SU 1 031 868 A1 (BELO IND CONS DES) 30 July 1983

## Description

The present invention concerns an apparatus for gripping pieces of meat. The apparatus concerns a needle gripper that grips an object by thrusting needles into the object according to a particular pattern and in defined directions such that a needle cross is created inside the object. Thereby it is achieved a gripping action or fixation between the needle gripper or tool, and the object. Furthermore a method for gripping objects by use of such an apparatus is described.

The handling of particular types of products by machines is in some cases complicated and such products are therefore normally handled manually. Examples of products that can be difficult to handle are fish filets, filets from poultry, or other smaller pieces of meat. The manual handling is particularly performed in connection with packing. Manual packing has several disadvantages. The first disadvantage is obvious, and is related to doing manual work that otherwise could have been done automatically. Another problem is that mistakes often occur in such manual operations. During packing, for instance when feeding filets in deep drawing operations or vacuum packing machines, mistakes often happen because the apparatus spills fluid on the welding seams where the upper and lower foil are welded together around the product such that a loss of vacuum is created. Accordingly, today, a lot of packaging must be reopened and packed anew. This delays the operator or the operators at the packaging machine. By using a robot and a gripper according to the invention, the machines can be governed in a way such that the above-mentioned problems are avoided.

Similar problems are found in many areas, particularly within the food industry.

Needle grippers for handling soft and easily penetrable materials are for instance shown in JP 56136729A concerning an apparatus for handling bar shaped foam bodies for cushioning or pillows, where a first group parallel needles are led into the foam body followed by a second group of parallel needles such that the needles create a cross inside the foam body for thereafter to be able to remove the foam body from an element where the foam body is secured.

US-A-5 054 831 discloses another needle gripper with needles adapted to create a cross inside the object to be gripped. The object of the present invention is to provide a needle gripper suitable for gripping pieces of meat. Accordingly, the present invention provides an apparatus according to claim 1 and a method according to claim 9 involving the use of such apparatus.

The apparatus may include at least four needles, where two of the needles are situated in a first plane, and the other two needles are situated in a second plane, where the first and the second plane are parallel, and where each of the needles of the first plane, when these are in their extended position, creates two crosses with each of the needles of the second plane when these are in their extended position. The needles of each plane do not intersect each other as this would create collisions between the needles.

The apparatus may include four rows of parallel needles.

Each row of parallel needles may include three needles.

The needles of each cross may cross each other at a distance of between 1 and 15 mm.

The tool block may include borings that create guides for the needles.

The tool block may include a curved surface towards an element that is to be lifted.

The tool block may be adapted for being secured to a robot through a fixing element.

The actuation units may be pneumatic cylinders and borings in the tool block may create manifolds for pressurised air connected to a source for pressurised air and the pneumatic actuation units.

Two of the rows of needles can be driven simultaneously between the extended position and the retracted position.

Alternatively all the rows of needles may be driven simultaneously between the extended position and the retracted position.

Furthermore, the apparatus of the invention can be used in a method for moving objects that can be penetrated, for instance pieces of meat, and may include providing an object on a conveyor belt, detecting the position of the filet with a camera, optical sensors, pressure sensitive elements or similar devices, transferring the positional data to a microprocessor controlling a robot with an apparatus according to the invention, leading the apparatus above the filet and bringing the underside of the apparatus to a position adjoining the filet by means of the robot, leading at least two rows of needles simultaneously into the filet, lifting the filet with the robot by means of the apparatus, placing the filet in a predetermined position with the robot and pulling the at least two rows of needles substantially simultaneously out of the filet to release the filet in the predetermined position.

Alternatively, when four rows of needles are used, these can be led into and out of the filet simultaneously. It would normally be favourable if the filet not is displaced in relation to the apparatus when the needles are inserted, and it may therefore be an advantage if the forces that the needles inflict on the filet neutralise each other such that the filet remains substantially stationary in relation to the apparatus during the gripping and releasing operation. The needles may also be controlled such that they inflict a certain strain on the filet when the needles are inserted.

The apparatus of the invention may for instance be used for feeding filet pieces into freezers in connection with a robot and a system for identifying the position of the filet pieces for instance on a conveyor belt. A camera or photo cell may for instance be used to identify the position of the filet pieces. The use of a needle gripper may also be used for handling whole fish, for instance for feeding a fileting machine. Similar needs are also found within the salt and clip fish industry where a needle gripper can be used. Within the meat industry there is also a need for automation of the handling operations whether it is in relation to poultry, pork or nolt sectors.

The needle gripper according to the invention can be used for handling all objects that do not get their quality affected substantially negatively if the object is penetrated by thrusting needles. The needle gripper is, in other words, not suited for handling objects where the quality is affected by the needle penetrations, or where the objects may contain hard parts or particles that may destroy the needles.

Accordingly filet products without considerable residue of bone of fish, poultry, pork or nolt are relevant objects to handle with a needle gripper. This is also true for other objects such as components of soft foam, of soft polymers or other soft materials that are not negatively affected by the penetrating needles. The needle gripper may also be used for objects that include harder components such as bones, etc., if the needles are made with a sufficient strength.

Short description of the enclosed drawings:
Fig. 1 is a perspective view of a needle gripper according to one embodiment of the invention;
Fig. 2 is a perspective view of the embodiment of the needle gripper shown on Fig. 1 secured through a robot;
Fig. 3 is an elevated view of the needle gripper shown on Fig. 1; and
Fig. 4 is an elevated view perpendicular to Fig. 3 of the needle gripper.

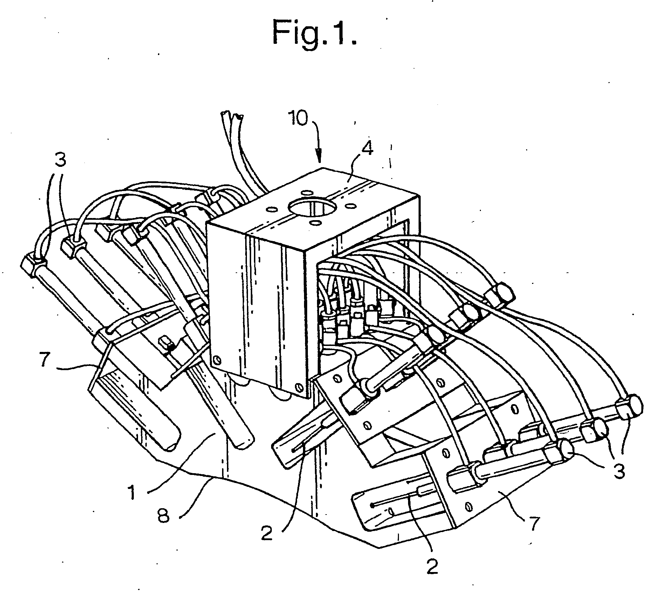

Fig. 1 shows an embodiment of a needle gripper 10 according to the invention, designed for handling filet products. The needle gripper 10 shows a tool block 1 made of plastic with four rows of needles 2, where three needles 2 are positioned in each row, making a total of twelve needles 2. The needles 2 are actuated in and out of the tool block 1 by small pneumatic cylinders 3. A manifold for pressurised air to the air cylinders 3 is integrated in the tool block 1, both for moving the needles 2 in and out. A bracket 4 for securing the tool block 1 to an arm of a robot is made of stainless steel. With the first prototype of a needle gripper 10, it is measured a cycle time for moving filets at a distance of 60 cm in 1.7 seconds, but this time can be reduced substantially. The tool block is for instance made of polyethylene (PEHD) giving low friction between a needle guide in the block 1 and needles 2 when the needles 2 are to be moved in and out of the object. At the same time, PEHD is a plastic material that is used considerably within the food industry. The material can resist conventionally used detergents and has very limited absorption of humidity.

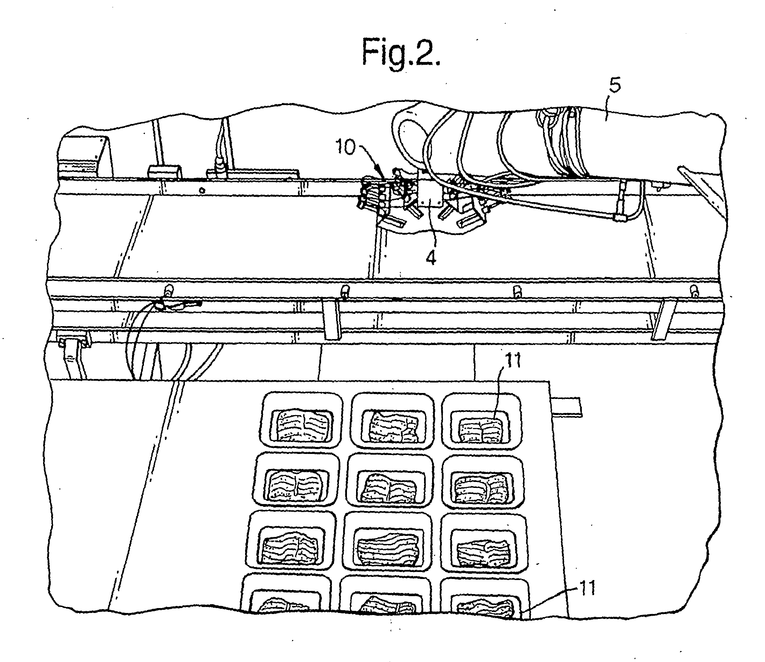

On Fig. 2 it is shown a needle gripper 10 secured to a robot 5 with a bracket 4 for moving filets 11.

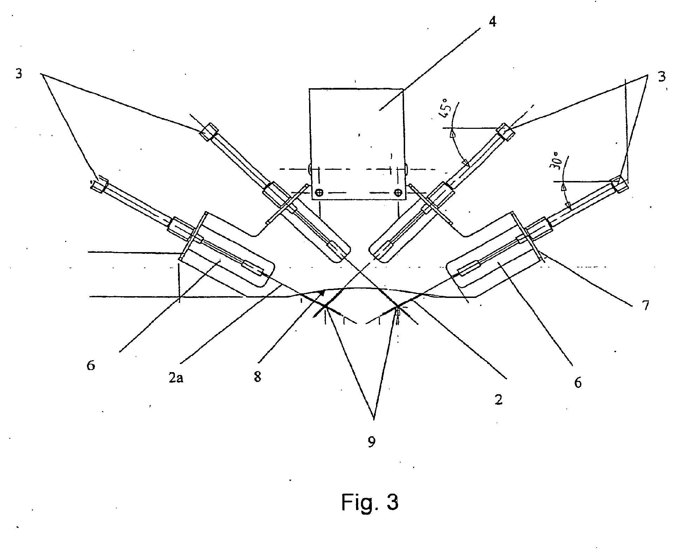

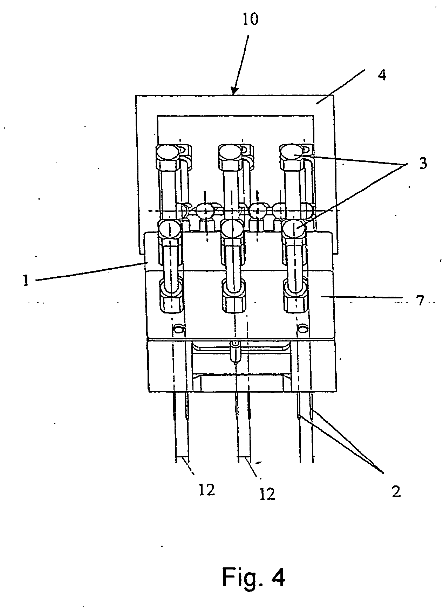

On Fig. 3 it is further shown that it is milled a notch 6 to the rows of needles and that it has been made four plane surfaces for mounting plates 7, where the pneumatic cylinders 3 are secured. The stroke for each cylinder, and thereby the length a needle 2 penetrates an object, is in the shown embodiment about 32 mm. In the mid-zone of the block 1 it has also been removed material to reduce weight due to the necessary force applied by the robot. The needle gripper 10 must preferably be able to be accelerated quickly for fast and precise manoeuvring. The corners are rounded to ease cleaning. It is an advantage within the food industry if the constructional details are made such that organic material that adheres to the construction can easily be removed during washing and that subsequent control and inspection is simple. It has been drilled two cylinders with holes (not shown) placed parallel in the upper part of the block 1 just below the attachment for the bracket 4. These two holes are sealed at both ends and act as a manifold for the pressurised air that goes to the upper and lower part of the cylinder 3, respectively. The block 1 is made with a curved surface 8 as a contact surface towards the object that is to be gripped. The radius of curvature of the arch 8 is 200 mm. This surface/arch 8 can be adapted to the object that is to be gripped by the gripper 10 when the block 1 is designed. The needles 2 are placed in four rows where two and two rows ensure a row of needle crosses 9 inside the object. The distance between the contact surface 8 and the needle crosses is ca. 12 mm, meaning that the needle crosses are situated 12 mm inside the object that is to be gripped. The needles 2 have a diameter of 1.5 mm and are made of stainless steel (spring steel) that makes the needles both rigid and elastic and the forces applied are kept well within the elastic properties of the materials, such that the needles 2 when they are deformed, will spring back to their initial shape. The needles 2 are pointed at the end when they are used for meat and fish to reduce the forces that are necessary to thrust the needles into the flesh, and to deform the object that is penetrated as little as possible. Alternatively, the points of the needles 2 may be rounded, but the shape must be adapted to the object that is to be lifted. The shape of the needle tip must provide a good combination of penetrating ability inside the object that is to be lifted and mechanical durability and stiffness. As shown from Fig. 2, the angle between the rows of needles and a horizontal is chosen to 30 and 45°, respectively. The distance between the two rows of needles is chosen to 50 mm. The extension of needle 2 past the needle intersection 9 is ca. 8 mm. This gives a good firm grip when the object is a filet of fish 11. The distance between the two needles 2 creating needle crosses 9 defined as 12 on Fig. 4, is 6 mm. This distance can vary depending on the material, but for filets of fish 11 the mentioned distance works well. For softer material the distance can be reduced and for more rigid material the distance can be increased.

The distance of the guide 2a in the block 1 for the needles 2 in the two outermost rows is chosen to be 24 mm. For the two mid-rows the length of the needle guides 2a is somewhat longer.

The needles 2 are secured to pneumatic cylinders 3 by means of a mechanical joint, threads, bracing or in any other way.

Change of a needle 2 that for instance has been bent due to a mistake can be performed in a simple way by exchanging a mounting plate 7 with prefixed cylinders 3 with needles 2. The cylinders 3 can for instance give a force for inward movement of ca. 17 N and for outward movement of ca. 13 N at an air pressure of 6 bar. By using a cylinder 3 for each needle 2, problems with the motion of one needle 2 will not be transmitted to the rest of the needles 2. For filets of fish the mentioned forces are sufficient.

The force that is to be brought on to the needles 2 to move the needles 2 in and out of the object 11 that is to be gripped, can be provided by other elements than cylinders 3. As an alternative to cylinders 3, a whole row of needles may be secured to a stiff element, such as a bar, that a force is applied to such that the entire row of needles is collectively moved in and out of the object 11. The motion can be provided by a mechanism connected between the rod and a mechanical force unit for instance a cylinder that applies a linear motion. Alternatively, a rotating motion and a transferral system for instance with cams or crank structures can be used. Two and two rows can be moved synchronously. Alternatively, all the four rows may be moved synchronously. Alternatively, the needles 2 may be moved by electrical actuators. For some objects 11 it may be an advantage if the two rows of needles pointing outwards are first moved into the object to create a certain strain in the object 11. Thereafter the remaining rows of needles are thrust into the object to secure the fixing of the filet. For filets of fish 11 all the four rows of needles may be operated simultaneously. Bracket or holder 4 may have a material thickness of 2 to 3 mm and be made of stainless steel. This bracket 4 is at the same time acting as a protection for the upper part of the needle gripper 10. The bracket 4 ensures transfer of force from the needle gripper 10 and to the robot 5 shown on Fig. 2. In the described embodiment the needles have a thickness of 1.5 mm which creates needle penetrations in a filet of fish that hardly will be visible when the needles 2 has been pulled out. The filet 1 will not have any reduced properties as a finished product after having been affected by needles of that size.

On Fig. 4 it is shown a needle gripper 10 as shown on Fig. 3 from the side. Bracket 4, pneumatic cylinders 3, securing plate for cylinders 7 and needles 2 are clearly shown. Furthermore the distance 12 between the needles 2 in a needle cross is shown. This distance can as previously mentioned be 6 mm. The distance may, however, vary depending on the consistency of the object that is to be lifted. It is shown three needles 2 in each of the four rows. The distance between the needles 2 of each row can for instance be 20 mm to 30 mm, but may be less for soft objects and more for stiffer objects. Tests have shown that a distance of between 12 mm and 30 mm is favourable for filets of fish. The number of needles 2 on each row, and thereby the width of the apparatus is adapted to the filets, or the objects that are to be lifted. The shown apparatus is 90 mm wide, and the width of the bracket 4 is 95 mm.

With the shown gripper 10, objects can be lifted independently of friction between the object and the gripping element.

In the shown embodiment it is described needles that can move in parallel planes. There is, however, nothing to prevent needles from moving in planes that are not parallel. Moving needles in parallel planes is, however, practical in a mechanical sense. It is of some significance that the needles move into the object in a sequence in a pattern such that the forces imposed by the various needles substantially even each other out such that the object that is to be lifted is not displaced when the object is secured or released.

## Claims

1. An apparatus (10) for gripping pieces of meat, comprising at least two needles (2) placed at angle in relation to each other;
actuation units (3) connected to the needles (2) to move these in a lengthwise direction between an extended and a retracted position;
a tool block (1) for securing the actuation units (3) including a rigid contact face (8), such that the needles can be moved in and out of the contact face of the tool block (1) between the extended position and the retracted position; and
guides (2a) for the needles (2) in the tool block (1) angled such that the needles are adapted to create a cross (9) inside the piece of meat to be gripped when they are in the extended position.

2. An apparatus (10) according to claim 1,
**characterised in that** it includes at least four needles (2), where the two needles (2) are in a first plane, and two needles (2) are in a second plane, where the first and the second plane are parallel, and where the needles (2), when these are in their extended position, create two crosses (9).

3. An apparatus (10) according to claim 1 or 2,
**characterised in that** it includes at least four rows of parallel needles (2).

4. An apparatus according to claim 3,
**characterised in that** each row of parallel needles (2) includes at least three needles (2).

5. An apparatus according to one of the preceding claims,
**characterised in that** the needles (2) of each cross (9) cross each other at a distance (12) of between 1 mm and 15 mm.

6. An apparatus (10) according to one of the preceding claims,
**characterised in that** the tool block (1) includes a curved surface (8) towards an element that is to be lifted.

7. An apparatus (10) according to one of the preceding claims,
**characterised in that** the tool block (1) is adapted for being secured to a robot (5) by a fixing element (4).

8. An apparatus (10) according to one of the preceding claims,
**characterised in that** the actuation units (3) are pneumatic cylinders and that borings in the tool block create manifolds for pressurised air connected to a source for pressurised air and the pneumatic actuation units (3).

9. A method for gripping objects that can be penetrated with an apparatus (10) according to claim 3, wherein
at least two of the rows of needles (2) are thrusted simultaneously between the extended position and the retracted position.

10. A method according to claim 9,
**characterised by** thrusting all the rows of needles (2) simultaneously between the extended position and the retracted position.

## Patentansprüche

1. Vorrichtung (10) zum Ergreifen von Fleischstücken, die Folgendes umfasst: wenigstens zwei Nadeln (2), die in einem Winkel relativ zueinander angeordnet sind; Betätigungseinheiten (3), die mit den Nadeln (2) verbunden sind, um diese in einer Längsrichtung zwischen einer ausgefahrenen und einer eingefahrenen Position zu bewegen;
einen Instrumentenblock (1) zum Befestigen der Betätigungseinheiten (3), mit einer starren Kontaktfläche (8), so dass die Nadeln in die und aus der Kontaktfläche des Instrumentenblocks (1) zwischen der ausgefahrenen Position und der eingefahrenen Position bewegt werden können; und
Führungen (2a) für die Nadeln (2) in dem Instrumentenblock (1), die so verwinkelt sind, dass die Nadeln so angeordnet werden, dass sie ein Kreuz (9) innerhalb des zu ergreifenden Fleischstücks bilden, wenn sie in der ausgefahrenen Position sind.

2. Vorrichtung (10) nach Anspruch 1, **dadurch gekennzeichnet, dass** sie wenigstens vier Nadeln (2) beinhaltet, wobei zwei Nadeln (2) in einer ersten Ebene liegen und zwei Nadeln (2) in einer zweiten Ebene liegen, wobei die erste und die zweite Ebene parallel sind und wobei die Nadeln (2), wenn sie in der ausgefahrenen Position sind, zwei Kreuze (9) bilden.

3. Vorrichtung (10) nach Anspruch 1 oder 2, **dadurch gekennzeichnet, dass** sie wenigstens vier Reihen paralleler Nadeln (2) beinhaltet.

4. Vorrichtung nach Anspruch 3, **dadurch gekennzeichnet, dass** jede Reihe paralleler Nadeln (2) wenigstens drei Nadeln (2) beinhaltet.

5. Vorrichtung nach einem der vorherigen Ansprüche, **dadurch gekennzeichnet, dass** sich die Nadeln (2) jedes Kreuzes (9) in einer Entfernung (12) zwischen 1 mm und 15 mm kreuzen.

6. Vorrichtung (10) nach einem der vorherigen Ansprüche, **dadurch gekennzeichnet, dass** der Instrumentenblock (1) eine gekrümmte Fläche (8) in Richtung auf ein anzuhebendes Element beinhaltet.

7. Vorrichtung (10) nach einem der vorherigen Ansprüche, **dadurch gekennzeichnet, dass** der Instrumentenblock (1) so gestaltet ist, dass er durch ein Befestigungselement (4) an einem Roboter (5) befestigt werden kann.

8. Vorrichtung (10) nach einem der vorherigen Ansprüche, **dadurch gekennzeichnet, dass** die Betätigungseinheiten (3) Druckluftzylinder sind und dass Bohrungen im Instrumentenblock Verteiler für Druckluft bilden, die mit einer Druckluftquelle und den pneumatischen Betätigungseinheiten (3) verbunden sind.

9. Verfahren zum Ergreifen von Objekten, die mit einer Vorrichtung (10) nach Anspruch 3 durchdrungen werden können, wobei wenigstens zwei der Reihen von Nadeln (2) gleichzeitig zwischen der ausgefahrenen Position und der eingefahrenen Position geschoben werden.

10. Verfahren nach Anspruch 9, **gekennzeichnet durch** Schieben aller Reihen von Nadeln (2) gleichzeitig zwischen der ausgefahrenen Position und der eingefahrenen Position.

## Revendications

1. Appareil (10) pour saisir des morceaux de viande, comprenant
au moins deux aiguilles (2) placées à un angle l'une de l'autre ;
des modules d'actionnement (3) connectés aux aiguilles (2) pour les déplacer dans une direction longitudinale entre une position étendue et une position rétractée ; un bloc d'outil (1) pour fixer les modules d'actionnement (3) comprenant une face de contact rigide (8) de sorte que les aiguilles peuvent être déplacées dans et hors de la face de contact du bloc d'outil (1) entre la position étendue et la position rétractée ; et
des guides (2a) pour les aiguilles (2) dans le bloc d'outil (1) placés à un angle de sorte que les aiguilles sont adaptées à créer une croix (9) à l'intérieur du morceau de viande devant être saisi lorsqu'elles sont dans la position étendue.

2. Appareil (10) selon la revendication 1,
**caractérisé en ce qu'**il comprend au moins quatre aiguilles (2), où deux aiguilles (2) sont dans un premier plan et deux aiguilles (2) sont dans un second plan, où le premier et le second plan sont parallèles, et où les aiguilles (2) créent deux croix (9) lorsqu'elles sont dans leur position étendue.

3. Appareil (10) selon la revendication 1 ou 2,
**caractérisé en ce qu'**il comprend au moins quatre rangées d'aiguilles parallèles (2).

4. Appareil selon la revendication 3,
**caractérisé en ce que** chaque rangée d'aiguilles parallèles (2) comprend au moins trois aiguilles (2).

5. Appareil selon l'une quelconque des revendications précédentes,
**caractérisé en ce que** les aiguilles (2) de chaque croix (9) se croisent à une distance (12) comprise entre 1 mm et 15 mm.

6. Appareil (10) selon l'une quelconque des revendications précédentes,
**caractérisé en ce que** le bloc d'outil (1) comprend une surface courbée (8) vers un élément qui doit être soulevé.

7. Appareil (10) selon l'une quelconque des revendications précédentes,
**caractérisé en ce que** le bloc d'outil (1) est adapté à être fixé à un robot (5) par un élément de fixation (4).

8. Appareil (10) selon l'une quelconque des revendications précédentes,
**caractérisé en ce que** les modules d'actionnement (3) sont des cylindres pneumatiques et que des alésages dans le bloc d'outil créent des collecteurs pour de l'air pressurisé connectés à une source pour de l'air pressurisé et aux modules d'actionnement pneumatiques (3).

9. Procédé pour saisir des objets qui peuvent subir une pénétration avec un appareil (10) selon la revendication 3, dans lequel
au moins deux des rangées d'aiguilles (2) sont poussées simultanément entre la position étendue et la position rétractée.

10. Procédé selon la revendication 9,
**caractérisé par** la poussée de toutes les rangées d'aiguilles (2) simultanément entre la position étendue et la position rétractée.
